# FASCICULE DE BREVET EUROPEEN

(11) **EP 4 298 963 B1**
(45) Date de publication et mention de la délivrance du brevet: **12.03.2025**
(21) Numéro de dépôt: 23181035.9
(22) Date de dépôt: 22.06.2023
(51) Int. Cl.: A47J 27/21

(54) **BOUILLOIRE COMPRENANT UN COUVERCLE ÉQUIPÉ D'AU MOINS UN ORGANE DE VERROUILLAGE ÉTANCHE**
WASSERKOCHER MIT DECKEL, DER MIT MINDESTENS EINEM WASSERDICHTEN VERRIEGELUNGSORGAN AUSGESTATTET IST
KETTLE COMPRISING A LID PROVIDED WITH AT LEAST ONE WATERTIGHT LOCKING MEMBER

(30) Priorité: 30.06.2022 FR 2206682
(43) Date de publication de la demande: 03.01.2024
(73) Titulaire: SEB S.A., 69130 Ecully (FR)
(72) Inventeur: ALLEMAND, Bernard, 69134 ECULLY CEDEX (FR); SMAL, Chloé, 69134 ECULLY CEDEX (FR); MANSEAU, Charles, 69134 ECULLY CEDEX (FR)
(74) Mandataire: Germain Maureau

(56) Documents cités:
- EP-A1- 2 502 530
- WO-A1-2007/014806
- WO-A1-2022/130437
- JP-U- S62 100 144
- US-B1- 6 172 341

## Description

### Domaine technique

La présente invention concerne le domaine des appareils de chauffage de liquides, et en particulier des bouilloires électriques.

### Etat de la technique

Une bouilloire électrique comprend de façon connue :
- un contenant présentant un axe longitudinal central et délimitant un volume interne destiné à contenir de l'eau et dans lequel l'eau est destinée à être chauffée et notamment portée à ébullition,
- une poignée de préhension fixée au contenant,
- un bec verseur situé à l'opposé de la poignée de préhension par rapport à l'axe longitudinal central du contenant,
- un couvercle configuré pour être agencé au niveau de l'ouverture de remplissage supérieure et pour fermer le contenant,
- un joint d'étanchéité annulaire fixé au couvercle et configuré pour coopérer de manière étanche avec l'ouverture de remplissage supérieure,
- un dispositif de fixation configuré pour fixer de manière amovible, c'est-à-dire de manière temporaire et réversible, le couvercle au contenant, et
- un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne.

Le dispositif de fixation peut par exemple comporter au moins un organe de verrouillage logé au moins en partie dans le couvercle et configuré pour faire saillie hors du couvercle à travers une ouverture traversante prévue sur le couvercle, et au moins un élément de verrouillage prévu sur le contenant, l'au moins un organe de verrouillage étant monté mobile par rapport au couvercle entre une position de verrouillage dans laquelle l'au moins un organe de verrouillage fait saillie à travers l'ouverture traversante prévue sur le couvercle et est configuré pour coopérer avec l'au moins un élément de verrouillage de manière à fixer le couvercle au contenant, et une position de libération dans laquelle l'au moins un organe de verrouillage est configuré pour libérer l'au moins un élément de verrouillage de telle sorte que le couvercle peut être retiré du contenant.

En cas de renversement d'une telle bouilloire électrique, une partie de l'eau bouillante contenue dans le volume interne du contenant est susceptible de pénétrer dans le couvercle via l'ouverture traversante et ensuite de s'écouler hors du couvercle via des ouvertures d'évacuation de vapeur prévues sur le couvercle. Or, un tel écoulement d'eau bouillante hors de la bouilloire est susceptible de provoquer des brûlures à un utilisateur.

Le document WO 2022/130437 A1 montre une bouilloire électrique.

### Résumé de l'invention

La présente invention vise à remédier à tout ou partie de ces inconvénients.

Le problème technique à la base de l'invention consiste notamment à fournir une bouilloire qui soit de structure simple et économique, tout en présentant une grande sécurité d'utilisation.

A cet effet, la présente invention concerne une bouilloire, et en particulier une bouilloire électrique, comprenant :
- un contenant présentant un axe longitudinal central et délimitant un volume interne destiné à contenir de l'eau et dans lequel l'eau est destinée à être chauffée et notamment portée à ébullition, le contenant comprenant une ouverture de remplissage supérieure débouchant dans le volume interne,
- une poignée de préhension,
- un bec verseur configuré pour être situé à l'opposé de la poignée de préhension par rapport à l'axe longitudinal central du contenant,
- un couvercle configuré pour être agencé au niveau de l'ouverture de remplissage supérieure et pour fermer le contenant, le couvercle étant équipé d'un joint d'étanchéité annulaire configuré pour coopérer de manière étanche avec le contenant, et par exemple avec l'ouverture de remplissage supérieure, et
- un dispositif de fixation configuré pour fixer de manière amovible, c'est-à-dire de manière temporaire et réversible, le couvercle au contenant.

Le dispositif de fixation comprend au moins un organe de verrouillage, tel qu'une patte de verrouillage ou un doigt de verrouillage, logé au moins en partie dans le couvercle et configuré pour faire saillie hors du couvercle à travers une ouverture traversante prévue sur le couvercle, et au moins un élément de verrouillage, tel qu'un logement de verrouillage ou une encoche de verrouillage, prévu sur le contenant, l'au moins un organe de verrouillage étant monté mobile par rapport au couvercle entre une position de verrouillage dans laquelle l'au moins un organe de verrouillage fait saillie à travers l'ouverture traversante prévue sur le couvercle et est configuré pour coopérer avec l'au moins un élément de verrouillage de manière à fixer le couvercle au contenant, et une position de libération dans laquelle l'au moins un organe de verrouillage est configuré pour libérer l'au moins un élément de verrouillage de telle sorte que le couvercle peut être retiré du contenant.

Le dispositif de fixation comporte au moins un organe d'étanchéité distinct du joint d'étanchéité annulaire et configuré pour assurer une étanchéité au niveau de l'ouverture traversante prévue sur le couvercle.

Une telle configuration du dispositif de fixation, et en particulier la présence de l'organe d'étanchéité, empêche la pénétration d'eau dans le couvercle via l'ouverture traversante en cas de renversement de la bouilloire, et réduit donc sensiblement les risques d'écoulement d'eau bouillante hors de la bouilloire en cas de renversement de cette dernière. En conséquence, la bouilloire selon la présente invention présente une sécurité d'utilisation accrue par rapport aux bouilloires de l'art antérieur.

La bouilloire peut en outre présenter une ou plusieurs des caractéristiques suivantes, prises seules ou en combinaison.

Selon un mode de réalisation de l'invention, l'au moins un organe d'étanchéité est configuré pour coopérer de manière étanche avec l'au moins un organe de verrouillage et l'ouverture traversante.

Selon un mode de réalisation de l'invention, l'au moins un organe de verrouillage est configuré pour comprimer l'au moins un organe d'étanchéité lorsque l'au moins un organe de verrouillage occupe la position de verrouillage.

Selon un mode de réalisation de l'invention, l'au moins un organe d'étanchéité s'étend autour de l'au moins un organe de verrouillage, et est par exemple annulaire.

Selon un mode de réalisation de l'invention, l'au moins un organe d'étanchéité est fixé au couvercle.

Selon un mode de réalisation de l'invention, l'ouverture traversante prévue sur le couvercle débouche dans une surface périphérique externe du couvercle et est située en dessous du joint d'étanchéité annulaire. Ainsi, l'au moins un organe de verrouillage est configuré pour s'étendre en partie en dessous du joint d'étanchéité annulaire lorsque l'au moins un organe de verrouillage occupe la position de verrouillage.

Selon un mode de réalisation de l'invention, l'au moins un organe de verrouillage est configuré pour être situé en retrait de la surface périphérique externe du couvercle ou pour être affleurant avec la surface périphérique externe du couvercle lorsque l'au moins un organe de verrouillage occupe la position de libération.

Selon un mode de réalisation de l'invention, l'au moins un organe de verrouillage est monté coulissant par rapport au couvercle selon une direction de coulissement.

Selon un mode de réalisation de l'invention, la direction de coulissement s'étend sensiblement radialement par rapport à un axe central du couvercle. Une telle direction de coulissement assure une fixation optimale du couvercle sur le contenant lorsque l'au moins un organe de verrouillage occupe la position de verrouillage.

Selon un mode de réalisation de l'invention, le dispositif de fixation comporte un organe de rappel configuré pour rappeler l'au moins un organe de verrouillage dans la position de verrouillage.

Selon un mode de réalisation de l'invention, l'organe de rappel est logé dans le couvercle.

Selon un mode de réalisation de l'invention, la bouilloire comporte un mécanisme d'actionnement prévu sur le couvercle et configuré pour déplacer l'au moins organe de verrouillage dans la position de libération lorsque le mécanisme d'actionnement est actionné par un utilisateur.

Selon un mode de réalisation de l'invention, le mécanisme d'actionnement comporte un organe d'actionnement qui est actionnable manuellement par un utilisateur et qui est configuré pour déplacer l'au moins un organe de verrouillage de la position de verrouillage à la position de libération, l'organe d'actionnement étant monté mobile entre une première position d'actionnement et une deuxième position d'actionnement, l'organe d'actionnement et l'au moins un organe de verrouillage étant configurés de telle sorte qu'un déplacement de l'organe d'actionnement de la première position d'actionnement à la deuxième position d'actionnement entraîne un déplacement de l'au moins un organe de verrouillage de la position de verrouillage à la position de libération. Une telle configuration du mécanisme d'actionnement permet à un utilisateur de pouvoir déposer le couvercle par un simple actionnement du mécanisme d'actionnement.

Selon un mode de réalisation de l'invention, le mécanisme d'actionnement comporte un élément de sollicitation, tel qu'un ressort de sollicitation, configuré pour solliciter l'organe d'actionnement dans la première position d'actionnement.

Selon un mode de réalisation de l'invention, l'organe d'actionnement est monté mobile en rotation par rapport au couvercle autour d'un axe d'actionnement.

Selon un mode de réalisation de l'invention, l'axe d'actionnement est sensiblement parallèle à l'axe central du couvercle, et peut par exemple être sensiblement parallèle à l'axe longitudinal central du contenant lorsque le couvercle est fixé au contenant.

Selon un mode de réalisation de l'invention, l'organe d'actionnement comporte au moins une surface de came sur laquelle une partie de l'au moins un organe de verrouillage est en contact.

Selon un mode de réalisation de l'invention, la partie de l'au moins un organe de verrouillage, qui est en contact sur l'au moins une surface de came, est un ergot qui est prévu sur l'au moins un organe de verrouillage.

Selon un mode de réalisation de l'invention, l'ergot est en contact glissant sur l'au moins une surface de came de telle sorte que, lorsque l'organe d'actionnement est déplacé de la première position d'actionnement à la deuxième position d'actionnement, l'ergot se déplace par rapport à l'organe d'actionnement en glissant sur l'au moins une surface de came et entraîne un déplacement de l'au moins un organe de verrouillage de la position de verrouillage à la position de libération.

Selon un mode de réalisation de l'invention, l'organe d'actionnement comporte une partie de manipulation configurée pour être manipulée par un utilisateur, et une partie d'actionnement logée dans le couvercle et configurée pour coopérer avec l'au moins un organe de verrouillage.

Selon un mode de réalisation de l'invention, l'axe longitudinal central du contenant est configuré pour s'étendre sensiblement verticalement lorsque le contenant repose sur une surface horizontale.

Selon un mode de réalisation de l'invention, le couvercle est configuré pour reposer sur une partie supérieure du contenant qui délimite l'ouverture de remplissage supérieure.

Selon un mode de réalisation de l'invention, le couvercle comporte un boîtier de couvercle sur lequel est prévue l'ouverture traversante et sur lequel est fixé le joint d'étanchéité annulaire, et un capot supérieur fixé au boîtier de couvercle et recouvrant le boîtier de couvercle, le capot supérieur et le boîtier de couvercle délimitant un logement de couvercle dans lequel est logé l'au moins un organe de verrouillage.

Selon un mode de réalisation de l'invention, l'au moins un organe d'étanchéité est logé dans le logement de couvercle.

Selon un mode de réalisation de l'invention, la partie d'actionnement de l'organe d'actionnement est logée dans le logement de couvercle.

Selon un mode de réalisation de l'invention, le capot supérieur comporte un organe de guidage, tel qu'une nervure de guidage, configuré pour guider en rotation l'organe d'actionnement lorsque l'organe d'actionnement est déplacé entre les première et deuxième positions d'actionnement.

Selon un mode de réalisation de l'invention, le dispositif de fixation comprend plusieurs organes de verrouillage prévus sur le couvercle et répartis autour d'un axe central du couvercle.

Selon un mode de réalisation de l'invention, le dispositif de fixation comprend deux organes de verrouillage prévus sur le couvercle et diamétralement opposés.

Selon un mode de réalisation de l'invention, la bouilloire comporte en outre un dispositif d'indexage angulaire, également nommé dispositif de détrompage, configuré pour définir une unique position de fixation du couvercle sur le contenant.

Selon un mode de réalisation de l'invention, le dispositif d'indexage angulaire comporte un élément d'indexage, tel qu'un bossage d'indexage, prévu sur le contenant, et un organe d'indexage, tel qu'un logement d'indexage, prévu sur le couvercle et configuré pour coopérer avec l'élément d'indexage lors de la fixation du couvercle sur le contenant.

Selon un mode de réalisation de l'invention, la bouilloire comporte en outre un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne.

Selon un mode de réalisation de l'invention, le circuit d'évacuation de vapeur comporte au moins une ouverture d'évacuation de vapeur, et par exemple une ou plusieurs ouverture(s) d'évacuation de vapeur, prévue sur le couvercle.

Selon un mode de réalisation de l'invention, l'au moins une ouverture d'évacuation de vapeur débouche dans une face supérieure du couvercle.

Selon un mode de réalisation de l'invention, le circuit d'évacuation de vapeur comprend :
- un premier orifice d'admission de vapeur et un deuxième orifice d'admission de vapeur qui sont prévus sur le couvercle et qui débouchent dans une face inférieure du couvercle et à proximité d'un bord périphérique de la face inférieure du couvercle, les premier et deuxième orifices d'admission de vapeur étant configurés pour être reliés fluidiquement au volume interne délimité par le contenant, et pour être disposés de part et d'autre d'un plan vertical médian de la bouilloire qui passe par le bec verseur et la poignée de préhension,
- une chambre interne délimitée par le couvercle, et
- un premier conduit de vapeur comprenant une première ouverture d'entrée de vapeur reliée fluidiquement au premier orifice d'admission de vapeur et une première ouverture de sortie de vapeur débouchant dans la chambre interne, et un deuxième conduit de vapeur comprenant une deuxième ouverture d'entrée de vapeur reliée fluidiquement au deuxième orifice d'admission de vapeur et une deuxième ouverture de sortie de vapeur débouchant dans la chambre interne.

Un tel positionnement des premier et deuxième orifices d'admission de vapeur permet d'éviter ou du moins de limiter sensiblement les risques d'écoulement d'eau bouillante hors de la bouilloire en cas de renversement de cette dernière.

Selon un mode de réalisation de l'invention, l'au moins une ouverture d'évacuation de vapeur est reliée fluidiquement à la chambre interne délimitée par le couvercle, l'au moins une ouverture d'évacuation de vapeur étant configurée pour permettre une évacuation de la vapeur contenue dans la chambre interne à l'extérieur du couvercle et par exemple vers l'extérieur de la bouilloire.

Selon un mode de réalisation de l'invention, la bouilloire comporte un dispositif de contrôle électromécanique comportant un élément bimétallique, le circuit d'évacuation de vapeur étant configuré pour diriger la vapeur générée dans le volume interne vers l'élément bimétallique, le dispositif de contrôle électromécanique étant configuré de telle sorte qu'un afflux de vapeur sur l'élément bimétallique déclenche un arrêt de la chauffe de la bouilloire.

Selon un mode de réalisation de l'invention, l'au moins une ouverture d'évacuation de vapeur est configurée pour diriger la vapeur contenue dans la chambre interne vers l'élément bimétallique.

Selon un mode de réalisation de l'invention, le boîtier de couvercle comporte un boîtier inférieur et un boîtier supérieur fixés l'un à l'autre et délimitant la chambre interne.

Selon un mode de réalisation de l'invention, la chambre interne est située sous le logement de couvercle.

Selon un mode de réalisation de l'invention, l'au moins une ouverture d'évacuation de vapeur débouche dans le logement de couvercle.

Selon un mode de réalisation de l'invention, le circuit d'évacuation de vapeur comporte au moins un trou de passage prévu sur le boîtier de couvercle, et par exemple prévu sur le boîtier supérieur, configuré pour relier fluidiquement la chambre interne au logement de couvercle. Ainsi, la vapeur contenue dans la chambre interne peut s'écouler vers l'extérieur du couvercle via l'au moins un trou de passage, le logement de couvercle et l'au moins une ouvertures d'évacuation de vapeur.

Selon un mode de réalisation de l'invention, l'au moins un trou de passage est prévu dans une partie arrière du couvercle. De ce fait, même si un utilisateur incline fortement la bouilloire pour verser de l'eau hors du contenant et que de l'eau pénètre, par les premier et deuxième conduits de vapeur, dans la chambre interne, l'eau ayant pénétrée dans la chambre interne se dirige vers l'avant du couvercle et donc à distance de l'au moins un trou de passage. Par conséquent, une telle disposition de l'au moins un trou de passage limite les risques d'écoulement d'eau via l'au moins une ouverture d'évacuation de vapeur lors d'une opération de versage.

Selon un mode de réalisation de l'invention, le circuit d'évacuation de vapeur comporte plusieurs trous de passage. De façon avantageuse, les trous de passage sont répartis, par exemple régulièrement répartis, autour de l'axe central du couvercle.

Selon un mode de réalisation de l'invention, la bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne, et de telle sorte que, lorsque la bouilloire est renversée et que la poignée de préhension et un deuxième côté latéral du contenant reposent de manière stable sur une surface horizontale, le deuxième orifice d'admission de vapeur est situé au-dessus du niveau d'eau dans le volume interne.

Selon un mode de réalisation de l'invention, les première et deuxième ouvertures de sortie de vapeur sont configurées pour être disposées de part et d'autre du plan vertical médian de la bouilloire.

Selon un mode de réalisation de l'invention, les premier et deuxième orifices d'admission de vapeur sont situés dans une moitié avant de la face inférieure du couvercle.

Selon un mode de réalisation de l'invention, les première et deuxième ouvertures de sortie de vapeur sont situées dans une partie arrière de la chambre interne. Une telle disposition des première et deuxième ouvertures de sortie de vapeur limite les risques d'écoulement d'eau dans le couvercle (via les premier et deuxième orifices d'admission de vapeur et les premier et deuxième conduits de vapeur) lorsqu'un utilisateur verse de l'eau bouillante dans un récipient en inclinant vers l'avant et vers le bas la bouilloire.

Selon un mode de réalisation de l'invention, les première et deuxième ouvertures de sortie de vapeur sont configurées pour être orientées à l'opposé du bec verseur, c'est-à-dire vers l'arrière de la bouilloire. Ces dispositions limitent encore les risques d'écoulement d'eau dans le couvercle (via les premier et deuxième orifices d'admission de vapeur et les premier et deuxième conduits de vapeur) lorsqu'un utilisateur verse de l'eau bouillante dans un récipient en inclinant vers l'avant et vers le bas la bouilloire.

Selon un mode de réalisation de l'invention, les premier et deuxième conduits de vapeur sont logés dans la chambre interne délimitée par le couvercle.

Selon un mode de réalisation de l'invention, le premier conduit de vapeur comporte une première portion de conduit primaire reliée fluidiquement au premier orifice d'admission de vapeur et une deuxième portion de conduit primaire s'étendant depuis la première portion de conduit primaire, la deuxième portion de conduit primaire étant courbée vers l'arrière de la bouilloire, et le deuxième conduit de vapeur comporte une première portion de conduit secondaire reliée fluidiquement au deuxième orifice d'admission de vapeur et une deuxième portion de conduit secondaire s'étendant depuis la première portion de conduit secondaire, la deuxième portion de conduit secondaire étant courbée vers l'arrière de la bouilloire. Ces dispositions limitent encore les risques d'écoulement d'eau dans le couvercle (via les premier et deuxième orifices d'admission de vapeur et les premier et deuxième conduits de vapeur) lorsqu'un utilisateur verse de l'eau bouillante dans un récipient en inclinant vers l'avant et vers le bas la bouilloire.

Selon un mode de réalisation de l'invention, le contenant comporte le bec verseur.

Selon un mode de réalisation de l'invention, le contenant comporte un fond chauffant situé sous le volume interne et configuré pour chauffer l'eau contenue dans le volume interne. De façon avantageuse, le fond chauffant loge un élément électrique chauffant.

Selon un mode de réalisation de l'invention, la bouilloire comporte une base de support sur laquelle est destiné à reposer le contenant.

### Brève description des figures

L'invention sera mieux comprise à l'aide de la description qui suit en référence aux dessins schématiques annexés représentant, à titre d'exemples non limitatifs, plusieurs formes d'exécution de cette bouilloire.
Figure 1 est une vue en perspective de dessus d'une bouilloire selon la présente l'invention.
Figure 2 est une vue en perspective de dessus d'un contenant de la bouilloire de la figure 1.
Figure 3 est une vue en perspective de dessus d'un couvercle de la bouilloire de la figure 1.
Figure 4 est une vue en perspective de dessous du couvercle de la figure 3.
Figure 5 est une vue en perspective de dessous du couvercle de la figure 3 dans laquelle un boîtier inférieur du couvercle a été déposé.
Figure 6 est une vue en perspective de dessous d'un mécanisme d'actionnement et de deux organes de fixation prévus sur le couvercle de la figure 3.
Figure 7 est une vue en perspective de dessus de l'un des organes de fixation de la figure 6.
Figure 8 est une vue en perspective de dessous du mécanisme d'actionnement de la figure 6.
Figure 9 est une vue en perspective de dessus du couvercle de la figure 3 dans laquelle un capot supérieur du couvercle a été déposé.
Figure 10 est une vue en perspective de dessus du mécanisme d'actionnement et des deux organes de fixation de la figure 6.
Figure 11 est une vue en perspective de dessous d'un capot supérieur du couvercle de la figure 3.
Figure 12 est une vue partielle de côté de la bouilloire de la figure 1 montrant la bouilloire renversée sur une surface horizontale et occupant une position stable dans laquelle une poignée de préhension de la bouilloire et le côté latéral gauche du contenant prennent appui sur la surface horizontale.
Figure 13 est une vue partielle de côté de la bouilloire de la figure 1 montrant la bouilloire renversée sur une surface horizontale et occupant une position stable dans laquelle une poignée de préhension de la bouilloire et le côté latéral droit du contenant prennent appui sur la surface horizontale.
Figure 14 est une vue en coupe du couvercle de la figure 3.
Figure 15 est une vue en coupe longitudinale de la bouilloire de la figure 1.

### Description détaillée

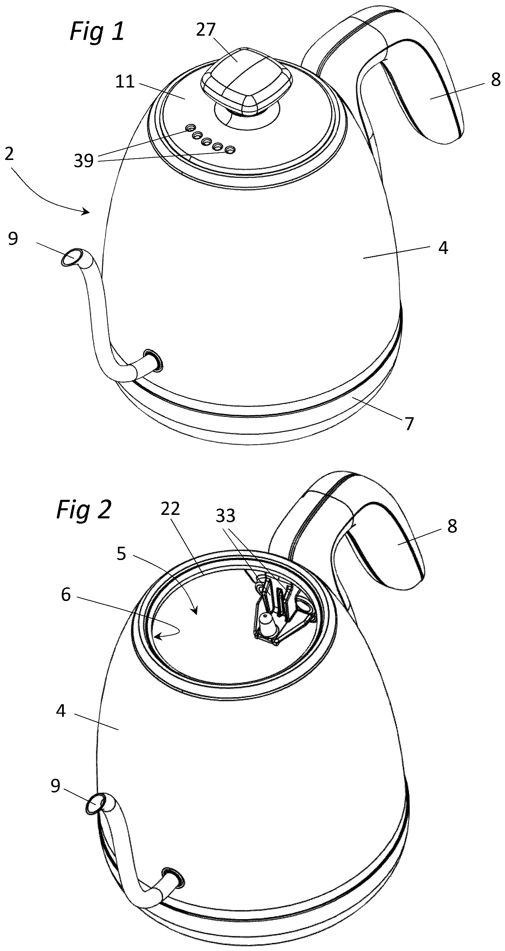

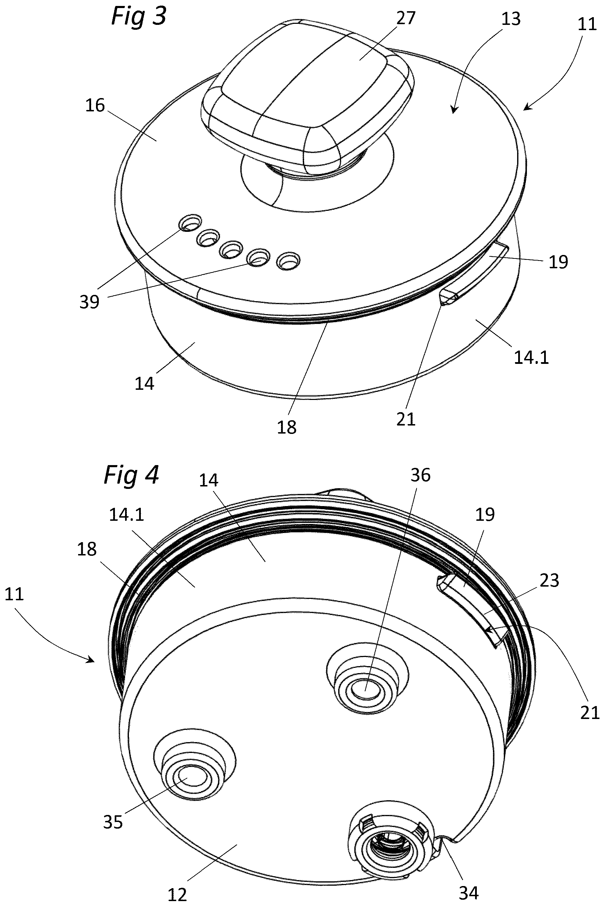

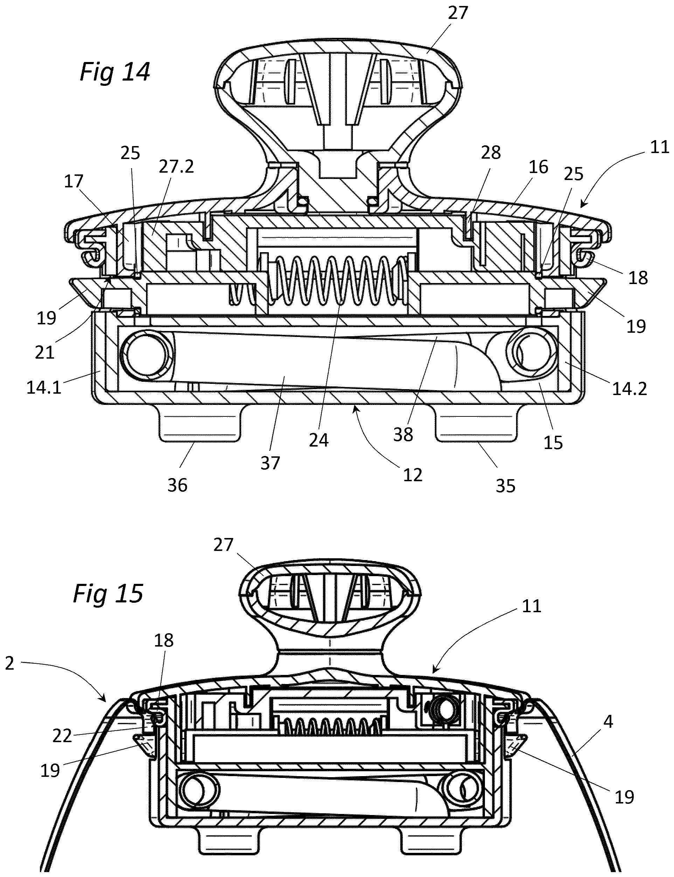

Les figures 1 à 15 représentent une bouilloire 2, et en particulier une bouilloire électrique, selon l'invention.

La bouilloire 2 comporte une base de support (non représentée sur les figures) configuré pour être alimentée électriquement par un cordon d'alimentation (non représenté sur les figures), et un contenant 4 configuré pour reposer sur la base de support.

Le contenant 4 présente un axe longitudinal central A configuré pour s'étendre sensiblement verticalement lorsque le contenant 4 repose sur une surface horizontale. De façon avantageuse, le contenant 4 présente une forme générale de révolution autour de l'axe longitudinal central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant (non représenté sur les figures) configuré pour être alimenté électriquement lorsque le contenant 4 repose sur la base de support.

La bouilloire 2 comporte en outre une poignée de préhension 8 fixée au contenant 4, et un bec verseur 9 situé à l'opposé de la poignée de préhension 8 par rapport à l'axe longitudinal central A du contenant 4. Le bec verseur 9 peut par exemple être fixé au contenant 4.

La bouilloire 2 comporte en outre un couvercle 11 configuré pour reposer sur un épaulement annulaire prévu sur une partie supérieure du contenant 4 et pour fermer le contenant 4. Le couvercle 11 est plus particulièrement configuré pour être agencé au niveau de l'ouverture de remplissage supérieure 6 et pour obturer de manière étanche l'ouverture de remplissage supérieure 6. Le couvercle 11 est pourvu d'une face inférieure 12 configurée pour être située en regard du volume interne 5 du contenant 4, et d'une face supérieure 13 configurée pour être orientée à l'opposé du contenant 4.

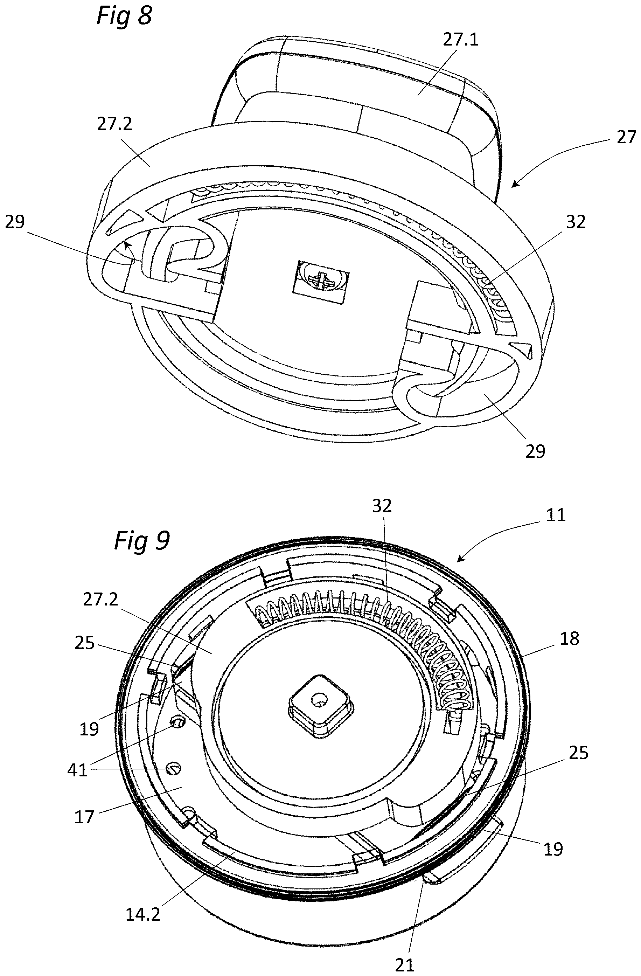

Selon le mode de réalisation de l'invention représenté sur les figures, le couvercle 11 comporte un boîtier de couvercle 14 comportant un boîtier inférieur 14.1 et un boîtier supérieur 14.2 qui sont fixés l'un à l'autre et qui délimitent une chambre interne 15 dont la fonction sera décrite ci-après. Le couvercle 11 comporte en outre un capot supérieur 16 fixé au boîtier supérieur 14.2 et recouvrant le boîtier supérieur 14.2. Le capot supérieur 16 et le boîtier supérieur 14.2 délimitent un logement de couvercle 17 (voir la figure 9) dont la fonction sera décrite ci-après.

Le couvercle 11 comporte également un joint d'étanchéité annulaire 18 fixé au boîtier de couvercle 14, et plus particulièrement au boîtier supérieur 14.2, et s'étendant autour du boîtier de couvercle 14. Le joint d'étanchéité annulaire 18 est configuré pour coopérer de manière étanche avec le contenant 4, et plus particulièrement avec l'ouverture de remplissage supérieure 6.

La bouilloire 2 comporte de plus un dispositif de fixation configuré pour fixer de manière amovible, c'est-à-dire de manière temporaire et réversible, le couvercle 11 au contenant 4.

Selon le mode de réalisation représenté sur les figures, le dispositif de fixation comporte plusieurs organes de verrouillage 19, tels que des doigts de verrouillage ou des loquets de verrouillage, prévus sur le couvercle 11 et répartis autour d'un axe central du couvercle 11, et plus particulièrement deux organes de verrouillage 19 qui sont diamétralement opposés par rapport à l'axe central du couvercle 11. Chaque organe de verrouillage 19 est logé dans le logement de couvercle 17 et est configuré pour faire saillie hors du couvercle 11 à travers une ouverture traversante 21 respective qui débouche dans une surface périphérique externe du couvercle 11, et plus particulièrement du boîtier de couvercle 14, et en dessous du joint d'étanchéité annulaire 18. Selon le mode de réalisation représenté sur les figures, chaque ouverture traversante 21 s'étend à travers le capot supérieur 16 et les boîtiers inférieur et supérieur 14.1, 14.2.

Le dispositif de fixation comporte au moins un élément de verrouillage 22 prévu sur une surface interne du contenant 4 et situé à proximité de l'ouverture de remplissage supérieure 6. Selon le mode de réalisation représenté sur les figures, le dispositif de fixation comporte un unique élément de verrouillage 22 et ce dernier est formé par un rebord périphérique qui est orienté vers le fond chauffant 7 du contenant 4 et qui délimite en partie l'ouverture de remplissage supérieure 6. Les organes de verrouillage 19 sont plus particulièrement configurés pour venir en butée contre un bord inférieur du rebord périphérique lorsque le couvercle 11 est fixé au contenant 4. Cependant, selon une variante de réalisation de l'invention, le dispositif de fixation pourrait comporter plusieurs éléments de verrouillage 22, et ces derniers pourraient être par exemple des logements de verrouillage ou des encoches de verrouillage configuré(e)s pour loger respectivement les organes de verrouillage 19.

Les organes de verrouillage 19 sont montés coulissants par rapport au couvercle 11 selon une direction de coulissement et entre une position de verrouillage dans laquelle chaque organe de verrouillage 19 fait saillie hors du boîtier de couvercle 14 à travers l'ouverture traversante 21 respective et est configuré pour coopérer avec l'élément de verrouillage 22 respectif de manière à fixer le couvercle 11 au contenant 4, et une position de libération dans laquelle chaque organe de verrouillage 19 est configuré pour libérer l'élément de verrouillage 22 respectif de telle sorte que le couvercle 11 peut être retiré du contenant 4. De façon avantageuse, la direction de coulissement s'étend sensiblement radialement par rapport à un axe central du couvercle 11.

Chaque organe de verrouillage 19 peut par exemple être configuré pour être situé en retrait de la surface périphérique externe du couvercle 11 ou pour être affleurant avec la surface périphérique externe du couvercle 11 lorsque les organes de verrouillage 19 occupent la position de libération.

De façon avantageuse, chaque organe de verrouillage 19 comporte une surface inclinée 23, telle qu'un chanfrein d'extrémité, configurée pour coopérer avec le contenant 4 lorsque le couvercle 11 est introduit dans l'ouverture de remplissage supérieure 6, de manière à automatiquement déplacer les organes de verrouillage 19 dans la position de libération. Une telle configuration du dispositif de fixation permet une fixation aisée du couvercle 11 sur le contenant 4.

Selon le mode de réalisation représenté sur les figures, le dispositif de fixation comporte un organe de rappel 24, tel qu'un ressort hélicoïdal, logé dans le logement de couvercle 17 et configuré pour rappeler les organes de verrouillage 19 dans la position de verrouillage. L'organe de rappel 24 peut par exemple être interposé entre les deux organes de verrouillage 19 et s'étendre sensiblement coaxialement aux organes de verrouillage 19.

Le dispositif de fixation comporte en outre deux organes d'étanchéité 25 logés dans le logement de couvercle 17 et distincts du joint d'étanchéité annulaire 18. Les deux organes d'étanchéité 25 sont configurés chacun pour assurer une étanchéité au niveau d'une ouverture traversante 21 respective prévue sur le couvercle 11.

Chaque organe d'étanchéité 25 est fixé au couvercle 11, et par exemple au capot supérieur 16. Chaque organe d'étanchéité 25 est annulaire et s'étend autour d'un organe de verrouillage 19 respectif. Chaque organe d'étanchéité 25 est donc plus particulièrement configuré pour coopérer de manière étanche avec une ouverture traversante 21 respective et un organe de verrouillage 19 respectif. De façon avantageuse, chaque organe de verrouillage 19 est configuré pour comprimer l'organe d'étanchéité 25 respectif lorsque les organes de verrouillage 19 occupent la position de verrouillage. Une telle configuration des organes de verrouillage 19 améliore encore l'étanchéité au niveau de chacune des ouvertures traversantes 21.

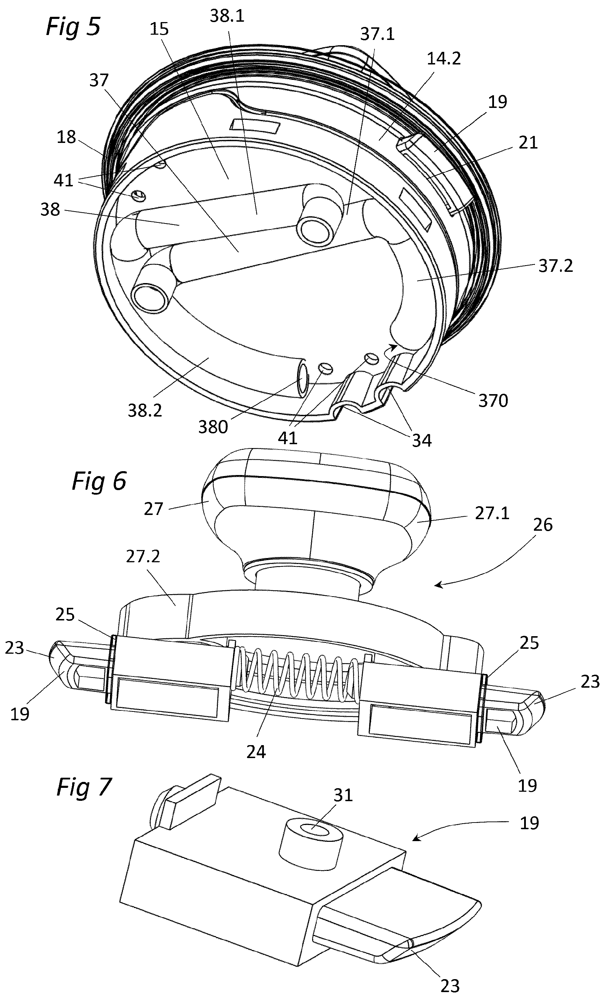

Comme montré plus particulièrement sur la figure 6, la bouilloire 2 comporte un mécanisme d'actionnement 26 prévu sur le couvercle 11 et configuré pour déplacer les organes de verrouillage 19 dans la position de libération lorsque le mécanisme d'actionnement 26 est actionné par un utilisateur.

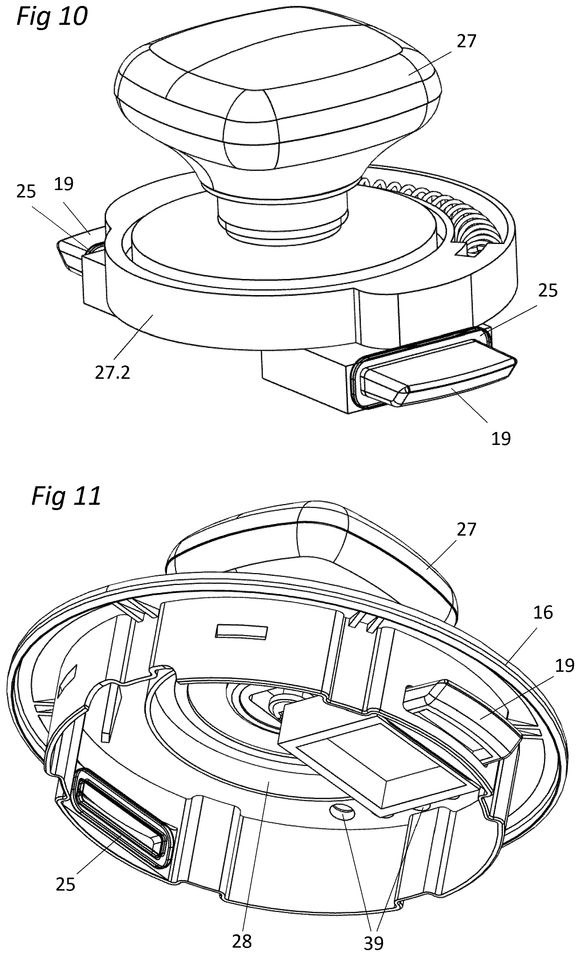

Le mécanisme d'actionnement 26 comporte plus particulièrement un organe d'actionnement 27 qui est actionnable manuellement par un utilisateur et qui est configuré pour déplacer les organes de verrouillage 19 de la position de verrouillage à la position de libération. De façon avantageuse, l'organe d'actionnement 27 est monté mobile en rotation par rapport au couvercle 11 autour d'un axe d'actionnement, par exemple colinéaire avec l'axe central du couvercle 11, et entre une première position d'actionnement et une deuxième position d'actionnement. Le capot supérieur 16 peut par exemple comporter un organe de guidage 28 (voir la figure 11), tel qu'une nervure de guidage annulaire s'étendant autour de l'axe central du couvercle 11, configuré pour guider en rotation l'organe d'actionnement 27 lorsque l'organe d'actionnement 27 est déplacé entre les première et deuxième positions d'actionnement.

L'organe d'actionnement 27 et les organes de verrouillage 19 sont configurés de telle sorte qu'un déplacement de l'organe d'actionnement 27 de la première position d'actionnement à la deuxième position d'actionnement entraîne un déplacement des organes de verrouillage 19 de la position de verrouillage à la position de libération.

Selon le mode de réalisation représenté sur les figures, l'organe d'actionnement 27 comporte deux surfaces de came 29, et chaque organe de verrouillage 19 comporte un ergot 31 en contact avec une surface de came 29 respective. Chaque ergot 31 est en contact glissant sur la surface de came 29 respective de telle sorte que, lorsque l'organe d'actionnement 27 est déplacé de la première position d'actionnement à la deuxième position d'actionnement, chaque ergot 31 se déplace par rapport à l'organe d'actionnement 27 en glissant sur la surface de came 29 respective et entraîne un déplacement de l'organe de verrouillage 19 respectif de la position de verrouillage à la position de libération.

De façon avantageuse, le mécanisme d'actionnement 26 comporte un élément de sollicitation 32, tel qu'un ressort de sollicitation logé dans le logement de couvercle 17 et prenant appui d'une part sur l'organe d'actionnement 27 et d'autre part sur le couvercle 11, configuré pour solliciter l'organe d'actionnement 27 dans la première position d'actionnement.

Selon le mode de réalisation représenté sur les figures, l'organe d'actionnement 27 comporte une partie de manipulation 27.1 configurée pour être manipulée par un utilisateur, et une partie d'actionnement 27.2, qui présente une forme générale de disque et qui est logée dans le logement de couvercle 17, configurée pour coopérer avec les organes de verrouillage 19.

Comme montré plus particulièrement sur les figures 2 et 5, la bouilloire 2 comporte un dispositif d'indexage angulaire, également nommé dispositif de détrompage, configuré pour définir une unique position de fixation du couvercle 11 sur le contenant 4. Le dispositif d'indexage angulaire peut par exemple comporter au moins un élément d'indexage 33, tel qu'une patte d'indexage ou un bossage d'indexage, prévu sur le contenant 4 et au moins un organe d'indexage 34, tel qu'un logement d'indexage, prévu sur le couvercle 11 et configuré pour coopérer avec l'élément d'indexage 33 lors de la fixation du couvercle 11 sur le contenant 4.

La bouilloire 2 comporte également un circuit d'évacuation de vapeur configuré pour convoyer, à l'extérieur du volume interne 5 et par exemple vers l'extérieur de la bouilloire 2, de la vapeur générée dans le volume interne 5 lors d'une ébullition de l'eau contenue dans le volume interne 5.

Le circuit d'évacuation de vapeur comprend notamment un premier orifice d'admission de vapeur 35 et un deuxième orifice d'admission de vapeur 36 qui sont prévus sur le couvercle 11 et qui débouchent dans la face inférieure 12 du couvercle 11 et à proximité d'un bord périphérique de la face inférieure 12 du couvercle 11. Lorsque le couvercle 11 est fixé au contenant 4 et que ce dernier repose sur une surface horizontale, les premier et deuxième orifices d'admission de vapeur 35, 36 débouchent dans le volume interne 5 délimité par le contenant 4 et au-dessus d'un niveau de remplissage maximal du contenant 4.

Selon le mode de réalisation représenté sur les figures, les premier et deuxième orifices d'admission de vapeur 35, 36 sont disposés de part et d'autre d'un plan vertical médian P de la bouilloire 2 qui passe par le bec verseur 9 et la poignée de préhension 8, et sont avantageusement disposés de manière symétrique par rapport au plan vertical médian P de la bouilloire 2.

Selon le mode de réalisation représenté sur les figures, les premier et deuxième orifices d'admission de vapeur 35, 36 sont situés dans une moitié avant de la face inférieure 12 du couvercle 11.

Comme montré plus particulièrement sur la figure 5, le circuit d'évacuation de vapeur comprend également un premier conduit de vapeur 37 comprenant une première ouverture d'entrée de vapeur reliée fluidiquement au premier orifice d'admission de vapeur 35 et une première ouverture de sortie de vapeur 370 débouchant dans la chambre interne 15 délimitée par le couvercle 11, et un deuxième conduit de vapeur 38 comprenant une deuxième ouverture d'entrée de vapeur reliée fluidiquement au deuxième orifice d'admission de vapeur 36 et une deuxième ouverture de sortie de vapeur 380 débouchant dans la chambre interne 15. De façon avantageuse, les premier et deuxième conduits de vapeur 37, 38 sont logés dans la chambre interne 15, et sont chacun formés par un tube d'écoulement respectif.

Les première et deuxième ouvertures de sortie de vapeur 350, 360 sont plus particulièrement configurées pour être disposées de part et d'autre du plan vertical médian P de la bouilloire 2, et avantageusement pour être disposées de manière symétrique par rapport au plan vertical médian P de la bouilloire 2. Selon le mode de réalisation représenté sur les figures, les première et deuxième ouvertures de sortie de vapeur 350, 360 sont situées dans une partie arrière de la chambre interne 15, et sont configurées pour être orientées à l'opposé du bec verseur 9, c'est-à-dire vers l'arrière de la bouilloire 2 et donc vers la poignée de préhension 8.

Le premier conduit de vapeur 37 peut par exemple être configuré pour être incliné par rapport à l'horizontale lorsque le contenant 4 repose sur une surface horizontale, de manière à guider de l'eau contenue dans le premier conduit de vapeur 37 vers le premier orifice d'admission de vapeur 35, et de façon similaire le deuxième conduit de vapeur 38 peut par exemple être configuré pour être incliné par rapport à l'horizontale lorsque le contenant 4 repose sur une surface horizontale, de manière à guider de l'eau contenue dans le deuxième conduit de vapeur 38 vers le deuxième orifice d'admission de vapeur 36.

Le circuit d'évacuation de vapeur comprend de plus plusieurs ouvertures d'évacuation de vapeur 39 prévues sur le couvercle 11 et reliées fluidiquement à la chambre interne 15 délimitée par le couvercle 11. Les ouvertures d'évacuation de vapeur 39 sont configurées pour permettre une évacuation de la vapeur contenue dans la chambre interne 15 à l'extérieur du couvercle 11 et par exemple vers l'extérieur de la bouilloire 2.

Selon le mode de réalisation représenté sur les figures, les ouvertures d'évacuation de vapeur 39 débouchent dans la face supérieure 13 du couvercle 11, et sont reliées fluidiquement à la chambre interne 15 via le logement de couvercle 17 et des trous de passage 41 qui sont prévus sur le boîtier de couvercle 14, et plus particulièrement sur le boîtier supérieur 14.2, et qui sont configurées pour relier fluidiquement la chambre interne 15 au logement de couvercle 17.

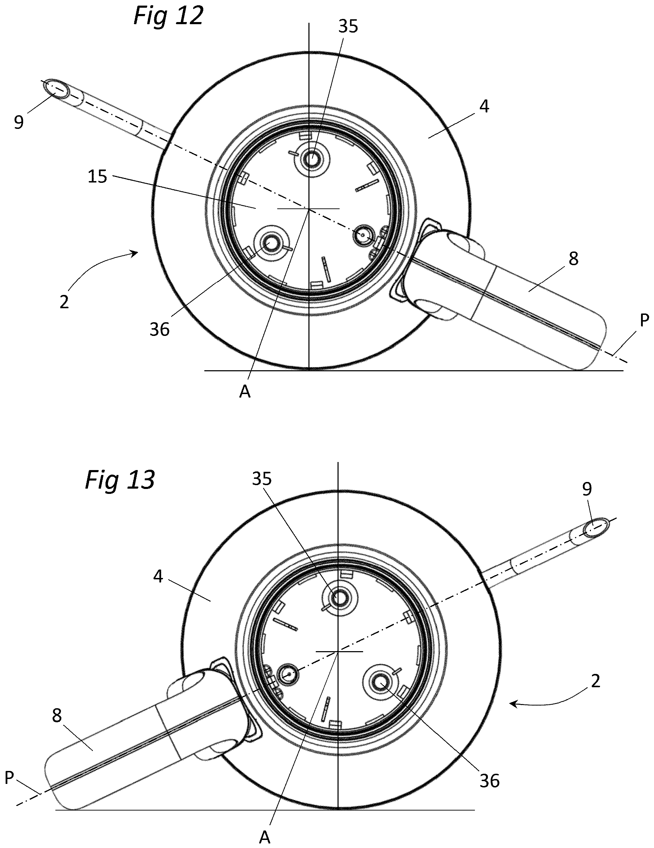

Comme montré plus particulièrement sur les figures 12 et 13, la bouilloire 2 est configurée :
- de telle sorte que, lorsque la bouilloire 2 est renversée et que la poignée de préhension 8 et un premier côté latéral, à savoir le côté gauche, du contenant 4 reposent de manière stable sur une surface horizontale, le premier orifice d'admission de vapeur 35 est situé au-dessus du niveau d'eau dans le volume interne 5, et
- de telle sorte que, lorsque la bouilloire 2 est renversée et que la poignée de préhension 8 et un deuxième côté latéral, à savoir le côté droit, du contenant 4 reposent de manière stable sur une surface horizontale, le deuxième orifice d'admission de vapeur 36 est situé au-dessus du niveau d'eau dans le volume interne 5.

Selon un mode de réalisation de l'invention non représenté sur les figures, la bouilloire 2 pourrait comporter un dispositif de contrôle électromécanique comportant un élément bimétallique, et le circuit d'évacuation de vapeur pourrait comporter au moins une ouverture d'évacuation de vapeur 39 qui est configurée pour être reliée fluidiquement à la chambre interne 15 délimitée par le couvercle 11 et qui est configurée pour diriger la vapeur contenue dans la chambre interne 15 vers l'élément bimétallique, le dispositif de contrôle électromécanique étant configuré de telle sorte qu'un afflux de vapeur sur l'élément bimétallique déclenche un arrêt de la chauffe de la bouilloire 2.

L'élément bimétallique peut par exemple être disposé dans la poignée de préhension 8. Dans ce cas, l'au moins une ouverture d'évacuation de vapeur 39 est prévue dans une partie arrière du couvercle 11 et est configurée pour être orientée vers la poignée de préhension 8.

Selon une variante de réalisation de l'invention, l'élément bimétallique pourrait être disposé dans une partie inférieure du contenant 4. Dans ce cas, l'au moins une ouverture d'évacuation de vapeur 39 est prévue dans une partie arrière du couvercle 11 et est configurée pour être reliée fluidiquement à un tube vapeur qui est agencé dans le contenant 4 et qui est relié fluidiquement à l'élément bimétallique.

Selon un autre mode de réalisation de l'invention non représenté sur les figures, l'organe d'actionnement 27 pourrait comporter deux éléments de manipulation accessibles par exemple depuis la face supérieure 13 du couvercle 11 et agencés respectivement sur les deux organes de verrouillage 19. Les deux éléments de manipulation pourraient par exemple être configurés pour déplacer organes de verrouillage 19 dans la position de libération par pincement des deux éléments de manipulation, c'est-à-dire par un rapprochement des deux éléments de manipulation l'un de l'autre.

Bien entendu, la présente invention n'est nullement limitée au mode de réalisation décrit et illustré qui n'a été donné qu'à titre d'exemple.

## Revendications

1. Bouilloire (2) comprenant :
- un contenant (4) présentant un axe longitudinal central (A) et délimitant un volume interne (5) destiné à contenir de l'eau et dans lequel l'eau est destinée à être chauffée et notamment portée à ébullition, le contenant (4) comprenant une ouverture de remplissage supérieure (6) débouchant dans le volume interne (5),
- une poignée de préhension (8),
- un bec verseur (9) configuré pour être situé à l'opposé de la poignée de préhension (8) par rapport à l'axe longitudinal central (A) du contenant (4),
- un couvercle (11) configuré pour être agencé au niveau de l'ouverture de remplissage supérieure (6) et pour fermer le contenant (4), le couvercle (11) étant équipé d'un joint d'étanchéité annulaire (18) configuré pour coopérer de manière étanche avec le contenant (4), et
- un dispositif de fixation configuré pour fixer de manière amovible le couvercle (11) au contenant (4), le dispositif de fixation comprenant au moins un organe de verrouillage (19) logé au moins en partie dans le couvercle (11) et configuré pour faire saillie hors du couvercle (11) à travers une ouverture traversante (21) prévue sur le couvercle (11), et au moins un élément de verrouillage (22) prévu sur le contenant (4), l'au moins un organe de verrouillage (19) étant monté mobile par rapport au couvercle (11) entre une position de verrouillage dans laquelle l'au moins un organe de verrouillage (19) fait saillie à travers l'ouverture traversante (21) prévue sur le couvercle (11) et est configuré pour coopérer avec l'au moins un élément de verrouillage (22) de manière à fixer le couvercle (11) au contenant (4), et une position de libération dans laquelle l'au moins un organe de verrouillage (19) est configuré pour libérer l'au moins un élément de verrouillage (22) de telle sorte que le couvercle (11) peut être retiré du contenant (4),
**caractérisée en ce que** le dispositif de fixation comporte en outre au moins un organe d'étanchéité (25) distinct du joint d'étanchéité annulaire (18) et configuré pour assurer une étanchéité au niveau de l'ouverture traversante (21) prévue sur le couvercle (11).

2. Bouilloire (2) selon la revendication 1, dans laquelle l'au moins un organe de verrouillage (19) est configuré pour comprimer l'au moins un organe d'étanchéité (25) lorsque l'au moins un organe de verrouillage (19) occupe la position de verrouillage.

3. Bouilloire (2) selon la revendication 1 ou 2, dans laquelle l'au moins un organe d'étanchéité (25) s'étend autour de l'au moins un organe de verrouillage (19).

4. Bouilloire (2) selon l'une quelconque des revendications 1 à 3, dans laquelle l'au moins un organe d'étanchéité (25) est fixé au couvercle (11).

5. Bouilloire (2) selon l'une quelconque des revendications 1 à 4, dans laquelle l'ouverture traversante (21) prévue sur le couvercle (11) débouche dans une surface périphérique externe du couvercle (11) et est située en dessous du joint d'étanchéité annulaire (18).

6. Bouilloire (2) selon l'une quelconque des revendications 1 à 5, dans laquelle l'au moins un organe de verrouillage (19) est monté coulissant par rapport au couvercle (11) selon une direction de coulissement.

7. Bouilloire (2) selon la revendication 6, dans laquelle la direction de coulissement s'étend sensiblement radialement par rapport à un axe central du couvercle (11).

8. Bouilloire (2) selon l'une quelconque des revendications 1 à 7, dans laquelle le dispositif de fixation comporte un organe de rappel (24) configuré pour rappeler l'au moins un organe de verrouillage (19) dans la position de verrouillage.

9. Bouilloire (2) selon l'une quelconque des revendications 1 à 8, laquelle comporte un mécanisme d'actionnement (26) prévu sur le couvercle (11) et configuré pour déplacer l'au moins organe de verrouillage (19) dans la position de libération lorsque le mécanisme d'actionnement (26) est actionné par un utilisateur.

10. Bouilloire (2) selon la revendication 9, dans laquelle le mécanisme d'actionnement (26) comporte un organe d'actionnement (27) qui est actionnable manuellement par un utilisateur et qui est configuré pour déplacer l'au moins un organe de verrouillage (19) de la position de verrouillage à la position de libération, l'organe d'actionnement (27) étant monté mobile entre une première position d'actionnement et une deuxième position d'actionnement, l'organe d'actionnement (27) et l'au moins un organe de verrouillage (19) étant configurés de telle sorte qu'un déplacement de l'organe d'actionnement (27) de la première position d'actionnement à la deuxième position d'actionnement entraîne un déplacement de l'au moins un organe de verrouillage (19) de la position de verrouillage à la position de libération.

11. Bouilloire (2) selon la revendication 10, dans laquelle l'organe d'actionnement (27) est monté mobile en rotation par rapport au couvercle (11) autour d'un axe d'actionnement.

12. Bouilloire (2) selon la revendication 10 ou 11, dans laquelle l'organe d'actionnement (27) comporte au moins une surface de came (29) sur laquelle une partie de l'au moins un organe de verrouillage (19) est en contact.

13. Bouilloire (2) selon la revendication 12, dans laquelle la partie de l'au moins un organe de verrouillage (19), qui est en contact sur l'au moins une surface de came (29), est un ergot (31) qui est prévu sur l'au moins un organe de verrouillage (19).

14. Bouilloire (2) selon l'une quelconque des revendications 10 à 13, dans laquelle l'organe d'actionnement (27) comporte une partie de manipulation (27.1) configurée pour être manipulée par un utilisateur, et une partie d'actionnement (27.2) logée dans le couvercle (11) et configurée pour coopérer avec l'au moins un organe de verrouillage (19).

15. Bouilloire (2) selon l'une quelconque des revendications 1 à 14, laquelle comporte en outre un dispositif d'indexage angulaire configuré pour définir une unique position de fixation du couvercle (11) sur le contenant (4).

16. Bouilloire (2) selon l'une quelconque des revendications 1 à 15, laquelle comporte en outre un circuit d'évacuation de vapeur configuré pour convoyer, à l'extérieur du volume interne (5), de la vapeur générée dans le volume interne (5) lors d'une ébullition de l'eau contenue dans le volume interne (5).

17. Bouilloire (2) selon la revendication 16, laquelle comporte un dispositif de contrôle électromécanique comportant un élément bimétallique, le circuit d'évacuation de vapeur étant configuré pour diriger la vapeur générée dans le volume interne (5) vers l'élément bimétallique, le dispositif de contrôle électromécanique étant configuré de telle sorte qu'un afflux de vapeur sur l'élément bimétallique déclenche un arrêt de la chauffe de la bouilloire.

## Patentansprüche

1. Wasserkocher (2), umfassend:
- einen Behälter (4), der eine Mittellängsachse (A) aufweist und ein Innenvolumen (5) begrenzt, das bestimmungsgemäß Wasser enthalten soll und in dem das Wasser bestimmungsgemäß erhitzt und insbesondere zum Kochen gebracht werden soll, wobei der Behälter (4) eine obere Einfüllöffnung (6) umfasst, die in das Innenvolumen (5) mündet,
- einen Handgriff (8),
- einen Ausgießer (9), der so ausgelegt ist, dass er in Bezug auf die Mittellängsachse (A) des Behälters (4) dem Handgriff (8) gegenüberliegt,
- einen Deckel (11), der so ausgelegt ist, dass er im Bereich der oberen Einfüllöffnung (6) angeordnet ist und den Behälter (4) verschließt, wobei der Deckel (11) mit einer Ringdichtung (18) ausgestattet ist, die so ausgelegt ist, dass sie dicht mit dem Behälter (4) zusammenwirkt, und
- eine Befestigungsvorrichtung, die so ausgelegt ist, dass sie den Deckel (11) abnehmbar am Behälter (4) befestigt, wobei die Befestigungsvorrichtung mindestens ein Verriegelungsorgan (19), das mindestens zum Teil im Deckel (11) aufgenommen und so ausgelegt ist, dass es durch eine am Deckel (11) vorgesehene Durchgangsöffnung (21) aus dem Deckel (11) vorspringt, und mindestens ein Verriegelungselement (22) umfasst, das am Behälter (4) vorgesehen ist, wobei das mindestens eine Verriegelungsorgan (19) in Bezug auf den Deckel (11) zwischen einer Verriegelungsposition, in der das mindestens eine Verriegelungsorgan (19) durch die am Deckel (11) vorgesehene Durchgangsöffnung (21 ) vorspringt und so ausgelegt ist, dass es mit dem mindestens einen Verriegelungselement (22) zusammenwirkt, um den Deckel (11) am Behälter (4) zu befestigen, und einer Freigabeposition, in der das mindestens eine Verriegelungsorgan (19) so ausgelegt ist, dass es das mindestens eine Verriegelungselement (22) freigibt, sodass der Deckel (11) vom Behälter (4) abgenommen werden kann, beweglich angebracht ist,
**dadurch gekennzeichnet, dass** die Befestigungsvorrichtung weiter mindestens ein Dichtungsorgan (25) umfasst, das sich von der Ringdichtung (18) unterscheidet und so ausgelegt ist, dass es im Bereich der am Deckel (11) vorgesehenen Durchgangsöffnung (21) eine Abdichtung gewährleistet.

2. Wasserkocher (2) nach Anspruch 1, wobei das mindestens eine Verriegelungsorgan (19) so ausgelegt ist, dass es das mindestens eine Dichtungsorgan (25) zusammendrückt, wenn das mindestens eine Verriegelungsorgan (19) die Verriegelungsposition einnimmt.

3. Wasserkocher (2) nach Anspruch 1 oder 2, wobei sich das mindestens eine Dichtungsorgan (25) um das mindestens eine Verriegelungsorgan (19) herum erstreckt.

4. Wasserkocher (2) nach einem der Ansprüche 1 bis 3, wobei das mindestens eine Dichtungsorgan (25) am Deckel (11) befestigt ist.

5. Wasserkocher (2) nach einem der Ansprüche 1 bis 4, wobei die am Deckel (11) vorgesehene Durchgangsöffnung (21) in eine äußere Umfangsfläche des Deckels (11) mündet und unterhalb der Ringdichtung (18) liegt.

6. Wasserkocher (2) nach einem der Ansprüche 1 bis 5, wobei das mindestens eine Verriegelungsorgan (19) in Bezug auf den Deckel (11) in einer Verschieberichtung verschiebbar angebracht ist.

7. Wasserkocher (2) nach Anspruch 6, wobei sich die Verschieberichtung in Bezug auf eine Mittelachse des Deckels (11) im Wesentlichen radial erstreckt.

8. Wasserkocher (2) nach einem der Ansprüche 1 bis 7, wobei die Befestigungsvorrichtung ein Rückstellorgan (24) umfasst, das so ausgelegt ist, dass es das mindestens eine Verriegelungsorgan (19) in die Verriegelungsposition zurückstellt.

9. Wasserkocher (2) nach einem der Ansprüche 1 bis 8, der einen Betätigungsmechanismus (26) umfasst, der am Deckel (11) vorgesehen und so ausgelegt ist, dass er das mindestens eine Verriegelungsorgan (19) in die Freigabeposition bewegt, wenn der Betätigungsmechanismus (26) von einem Benutzer betätigt wird.

10. Wasserkocher (2) nach Anspruch 9, wobei der Betätigungsmechanismus (26) ein Betätigungsorgan (27) umfasst, das von einem Benutzer manuell betätigt werden kann und das so ausgelegt ist, dass es das mindestens eine Verriegelungsorgan (19) von der Verriegelungsposition in die Freigabeposition bewegt, wobei das Betätigungsorgan (27) zwischen einer ersten Betätigungsposition und einer zweiten Betätigungsposition beweglich angebracht ist, wobei das Betätigungsorgan (27) und das mindestens eine Verriegelungsorgan (19) derart ausgelegt sind, dass eine Bewegung des Betätigungsorgans (27) von der ersten Betätigungsposition in die zweite Betätigungsposition eine Bewegung des mindestens einen Verriegelungsorgans (19) von der Verriegelungsposition in die Freigabeposition bewirkt.

11. Wasserkocher (2) nach Anspruch 10, wobei das Betätigungsorgan (27) in Bezug auf den Deckel (11) um eine Betätigungsachse drehbeweglich angebracht ist.

12. Wasserkocher (2) nach Anspruch 10 oder 11, wobei das Betätigungsorgan (27) mindestens eine Nockenfläche (29) umfasst, an der sich ein Teil des mindestens einen Verriegelungsorgans (19) in Kontakt befindet.

13. Wasserkocher (2) nach Anspruch 12, wobei der Teil des mindestens einen Verriegelungsorgans (19), der sich an der mindestens einen Nockenfläche (29) in Kontakt befindet, eine Nase (31) ist, die an dem mindestens einen Verriegelungsorgan (19) vorgesehen ist.

14. Wasserkocher (2) nach einem der Ansprüche 10 bis 13, wobei das Betätigungsorgan (27) einen Handhabungsteil (27.1), der so ausgelegt ist, dass er von einem Benutzer gehandhabt werden kann, und einen Betätigungsteil (27.2) umfasst, der im Deckel (11) aufgenommen und so ausgelegt ist, dass er mit dem mindestens einen Verriegelungsorgan (19) zusammenwirkt.

15. Wasserkocher (2) nach einem der Ansprüche 1 bis 14, der weiter eine Winkelindexierungsvorrichtung umfasst, die so ausgelegt ist, dass sie eine einzige Befestigungsposition des Deckels (11) am Behälter (4) definiert.

16. Wasserkocher (2) nach einem der Ansprüche 1 bis 15, der weiter einen Dampfabführkreis umfasst, der so ausgelegt ist, dass er Dampf, der beim Kochen des im Innenvolumen (5) enthaltenen Wassers im Innenvolumen (5) erzeugt wird, aus dem Innenvolumen (5) heraus befördert.

17. Wasserkocher (2) nach Anspruch 16, der eine elektromechanische Steuervorrichtung umfasst, die ein Bimetallelement umfasst, wobei der Dampfabführkreis so ausgelegt ist, dass er den im Innenvolumen (5) erzeugten Dampf zum Bimetallelement lenkt, wobei die elektromechanische Steuervorrichtung derart ausgelegt ist, dass ein Zustrom von Dampf auf das Bimetallelement einen Stopp des Erhitzens des Wasserkochers auslöst.

## Claims

1. A kettle (2) comprising:
- a container (4) having a central longitudinal axis (A) and delimiting an internal volume (5) intended to contain water and in which the water is intended to be heated and in particular boiled, the container (4) comprising an upper filling opening (6) emerging into the internal volume (5),
- a grip handle (8),
- a pouring spout (9) configured to be located opposite the grip handle (8) with respect to the central longitudinal axis (A) of the container (4),
- a lid (11) configured to be arranged at the upper filling opening (6) and to close the container (4), the lid (11) being equipped with an annular seal (18) configured to sealingly cooperate with the container (4), and
- a fastening device configured to removably fasten the lid (11) to the container (4), the fastening device comprising at least one locking member (19) housed at least partially in the lid (11) and configured to project from the lid (11) through a through opening (21) provided on the lid (11), and at least one locking element (22) provided on the container (4), the at least one locking member (19) being movably mounted relative to the lid (11) between a locking position in which the at least one locking member (19) projects through the through opening (21) provided on the lid (11) and is configured to cooperate with the at least one locking element (22) so as to fasten the lid (11) to the container (4), and a release position in which the at least one locking member (19) is configured to release the at least one locking element (22) so that the lid (11) can be removed from the container (4),
**characterized in that** the fastening device further includes at least one sealing member (25) distinct from the annular seal (18) and configured to ensure sealing at the through opening (21) provided on the lid (11).

2. The kettle (2) according to claim 1, wherein the at least one locking member (19) is configured to compress the at least one sealing member (25) when the at least one locking member (19) occupies the locking position.

3. The kettle (2) according to claim 1 or 2, wherein the at least one sealing member (25) extends about the at least one locking member (19).

4. The kettle (2) according to any one of claims 1 to 3, wherein the at least one sealing member (25) is fastened to the lid (11).

5. The kettle (2) according to any one of claims 1 to 4, wherein the through opening (21) provided on the lid (11) emerges into an outer peripheral surface of the lid (11) and is located below the annular seal (18).

6. The kettle (2) according to any one of claims 1 to 5, wherein the at least one locking member (19) is slidably mounted relative to the lid (11) in a sliding direction.

7. The kettle (2) according to claim 6, wherein the sliding direction extends substantially radially with respect to a central axis of the lid (11).

8. The kettle (2) according to any one of claims 1 to 7, wherein the fastening device includes a return member (24) configured to bias the at least one locking member (19) to the locking position.

9. The kettle (2) according to any one of claims 1 to 8, which includes an actuation mechanism (26) provided on the lid (11) and configured to displace the at least one locking member (19) in the release position when the actuation mechanism (26) is actuated by a user.

10. The kettle (2) according to claim 9, wherein the actuation mechanism (26) includes an actuation member (27) which can be manually actuated by a user and which is configured to displace the at least one locking member (19) from the locking position to the release position, the actuation member (27) being movably mounted between a first actuation position and a second actuation position, the actuation member (27) and the at least one locking member (19) being configured such that a displacement of the actuation member (27) from the first actuation position to the second actuation position causes a displacement of the at least one locking member (19) from the locking position to the release position.

11. The kettle (2) according to claim 10, wherein the actuation member (27) is rotatably mounted relative to the lid (11) about an actuation axis.

12. The kettle (2) according to claim 10 or 11, wherein the actuation member (27) includes at least one cam surface (29) on which part of the at least one locking member (19) is in contact.

13. The kettle (2) according to claim 12, wherein the part of the at least one locking member (19), which is in contact on the at least one cam surface (29), is a lug (31) which is provided on the at least one locking member (19).

14. The kettle (2) according to any one of claims 10 to 13, wherein the actuation member (27) includes a manipulation part (27.1) configured to be manipulated by a user, and an actuation part (27.2) housed in the lid (11) and configured to cooperate with the at least one locking member (19).

15. The kettle (2) according to any one of claims 1 to 14, which further includes an angular indexing device configured to define a single position for fastening the lid (11) on the container (4).

16. The kettle (2) according to any one of claims 1 to 15, which further includes a steam discharge circuit configured to convey, outside the internal volume (5), steam generated in the internal volume (5) during boiling of the water contained in the internal volume (5).

17. The kettle (2) according to claim 16, which includes an electromechanical control device including a bimetallic element, the steam discharge circuit being configured to direct the steam generated in the internal volume (5) towards the bimetallic element, the electromechanical control device being configured such that a steam inflow on the bimetallic element triggers a stop of the heating of the kettle.
